(19) Europäisches Patentamt
European Patent Office
Office européen des brevets

(11) Veröffentlichungsnummer: **0 209 023**
**B1**

(12) # EUROPÄISCHE PATENTSCHRIFT

(45) Veröffentlichungstag der Patentschrift: **09.05.90**

(21) Anmeldenummer: **86109189.0**

(22) Anmeldetag: **04.07.86**

(51) Int. Cl.⁵: **C08G 8/28,** C09D 5/44, C09J 161/14, C08L 61/14, C09D 161/14

(54) **Modifizierte Phenolharze, Verfahren zu ihrer Herstellung und ihre Verwendung.**

(30) Priorität: **13.07.85 DE 3525073**

(43) Veröffentlichungstag der Anmeldung:
**21.01.87 Patentblatt 87/4**

(45) Bekanntmachung des Hinweises auf die Patenterteilung:
**09.05.90 Patentblatt 90/19**

(84) Benannte Vertragsstaaten:
**AT BE CH DE FR GB IT LI NL SE**

(56) Entgegenhaltungen:
**US-A- 4 120 847**
**US-A- 4 157 324**
**US-A- 4 525 492**

**PATENT ABSTRACTS OF JAPAN, Band 2, Nr. 48 (C-78)[30], 31. März 1978; & JP - A - 53 6397 (IBIGAWA DENKI KOGYO K.K.) 20.01.1978**

(73) Patentinhaber: **BASF Aktiengesellschaft, Carl-Bosch-Strasse 38, D-6700 Ludwigshafen(DE)**

(72) Erfinder: **Kempter, Fritz Erdmann, Dr., L 2,14, D-6800 Mannheim 1(DE)**
Erfinder: **Nieberle, Jürgen, Dr., Am Huettenwingert 19, D-6706 Wachenheim(DE)**

**EP 0 209 023 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft modifizierte Phenolharze auf der Basis o,o'-Methylenether verknüpfter Phenolresolether, die mit Amidgruppen und/oder Imidgruppen aufweisenden Verbindungen modifiziert worden sind, Verfahren zu ihrer Herstellung und ihre Verwendung.

Orthoreiche Resole sind z.B. aus der US-PS 3 485 797 bekannt. Dabei handelt es sich um ein Verfahren, welches in nicht-wäßrigen Lösungsmitteln, wie z.B. Benzol usw. durchgeführt wird.

Orthoreiche Resole, deren Methylolgruppen mit einwertigen Alkoholen partiell verethert worden sind, werden in der US-PS 4 120 847 und 4 157 324 sowie 4 122 054 beschrieben.

Verfahren zur Herstellung orthoreicher Resole mit niedrigen Gehalten an Metallionen und Phenol, die mit Alkoholen verethert worden sind, sind in der Deutschen Patentanmeldung P 34 22 510.2 beschrieben.

Aufgabe der vorliegenden Erfindung ist es, modifizierte o,o'-Methylenethergruppen verknüpfte Phenolresolether bereitzustellen, deren Modifizierungsmittel kein Alkohol ist, d.h. deren Methylolgruppen nicht in vergleichsweise reaktionsträge Methylolalkylether überführt worden sind, sondern Produkte bereitzustellen, die bei hohen Lager- und Verarbeitungsstabilitäten hohe Reaktivitäten aufweisen.

Ziel der vorliegenden Erfindung ist außerdem die Erarbeitung eines Herstellverfahrens für derartig modifizierte Phenolharze, die Verwendungsmöglichkeit der Verfahrensprodukte zur Herstellung von Preßmassen für Elektroisolierungen, zur Herstellung von Laminaten, speziell solchen für Elektroisolierungen, zur Herstellung von Fasermatten, vorzugsweise von Kautschukhilfsmitteln sowie Emissions- und Methylolgruppen-armen Vernetzungsmitteln für Lacksysteme bzw. zur Herstellung von Beschichtungsmitteln, insbesonders kathodisch abscheidbarer Elektrotauchlackbindemittel.

Insbesondere für den letztgenannten Einsatzzweck sollten Produkte hoher Reaktivität sowie den erforderlichen Stabilitätseigenschaften bereitgestellt werden.

Diese Aufgabe wird gelöst durch über o,o'-Methylenether verknüpfte Phenolresolether, die mit Amidgruppen bzw. Imidgruppen aufweisenden Verbindungen modifiziert worden sind und durch Verfahren zu ihrer Herstellung, die im wesentlichen Phenol-freie und Metallionen-arme Produkte sicherstellen.

Gegenstand der vorliegenden Erfindung sind modifizierte Phenolharze auf Basis von über o,o'-Methylenethergruppen verknüpften Phenolresolethern, die aus Phenol und/oder m-alkylsubstituierten Phenolen, gegebenenfalls im Gemisch mit anderen Alkylphenolen, und Formaldehyd oder Formaldehyd-liefernden Verbindungen in Gegenwart von Metall(II)salzen erhältlich sind, die dadurch gekennzeichnet sind, daß sie Amidgruppen und/oder Imidgruppen aufweisende Verbindungen eingebaut enthalten.

Bevorzugt sind solche modifizierten Phenolharze, bei welchen die Amidgruppen und/oder Imidgruppen aufweisenden Verbindungen über intermediär gebildete N-Methylolgruppen eingebaut sind.

Monoalkyl- oder Monoalkoxy-Carbamate sowie asymmetrische Dialkylharnstoffe sind als Modifizierungsmittel bevorzugt.

Gegenstand der vorliegenden Erfindung ist auch ein Verfahren zur Herstellung derartiger modifizierter Phenolharze aus Phenol und/oder m-alkylsubstituierten Phenolen, gegebenenfalls im Gemisch mit anderen Alkylphenolen und Formaldehyd oder Formaldehyd-liefernden Verbindungen in Gegenwart von Metall(II)salzen und anschließende Modifizierung mit mindestens einer Amidgruppen und/oder Imidgruppen aufweisenden Verbindung, das dadurch gekennzeichnet ist, daß

A. für den Fall der Verfahrensdurchführung beginnend mit der Methylolierung in wäßrigem Medium:
$a_1$ die Methylolierung in Anwesenheit von 0,5 bis 10 Gew.% zweiwertigen Metallionen, bezogen auf das eingesetzte Phenol, durchgeführt wird,
$a_2$ die zweiwertigen Metallionen anschließend als schwerlösliches Salz entfernt werden,
$a_3$ die Abtrennung des als Lösungsmittel im Reaktionsgemisch vorliegenden Wassers in Anwesenheit der Amidgruppen und/oder Imidgruppen aufweisenden Verbindung, gegebenenfalls in Anwesenheit eines Schleppmittels bei 30 bis 80°C, die Abtrennung des bei der Modifizierung (= Einbau der Amidgruppen und/oder Imidgruppen aufweisenden Verbindungen) entstehenden Reaktionswassers bei 40 bis 120°C, durchgeführt wird;
B. für den Fall der Verfahrensdurchführung, beginnend mit der Methylolierung in einem nicht polaren organischen Lösungsmittel
$b_1$ die Methylolierung in Anwesenheit von 0,1 bis 0,3 Gew.% zweiwertigen Metallionen, bezogen auf das eingesetzte Phenol, durchgeführt wird,
$b_2$ die Modifizierung in Anwesenheit mindestens einer Amidgruppen und/oder Imidgruppen aufweisenden Verbindung, gegebenenfalls unter Rückführung des übergehenden Destillates, bei 60 bis 120°C durchgeführt wird,

und schließlich die Restphenolmengen der nach A. oder B. hergestellten Verfahrensprodukte durch Dünnschichtverdampfung auf einen Gehalt an Phenol von unter 1 Gew.% entfernt werden.

Zur Modifizierung können Amidgruppen und/oder Imidgruppen aufweisende Verbindungen der allgemeinen Formel (I)

$$\begin{array}{c} R \\ | \\ H-N-CO-R^1 \end{array}$$

(I)

worin
R = H oder Alkyl mit 1 bis 18 Kohlenstoffatomen,
$R^1$ = Alkyl mit 1 bis 18 Kohlenstoffatomen, Alkoxy mit 1 bis 18 Kohlenstoffatomen, Hydroxyalkyl mit 2 bis 4 Kohlenstoffatomen, Oxaalkyl mit 3 bis 20 Kohlenstoffatomen, Hydroxyoxaalkyl mit 4 bis 20 Kohlenstoffatomen oder
R und $R^1$ miteinander zu einem 5- bis 7-gliedrigen Ring verbunden sind, wobei der NH-Rest von 2 Carbonylgruppen flankiert sein kann,
eingesetzt werden.

Die Metall(II)salze werden vorzugsweise in Form carbonsaurer Salze eingesetzt, wobei im Falle der Verfahrensdurchführung nach A als Carbonsäuresalze die Formiate, Acetate oder Propionate, im Falle der Verfahrensdurchführung nach B die Naphthenate, Oktoate und Neodekanoate zweiwertiger Metalle bevorzugt sind.

Gegenstand der vorliegenden Erfindung ist außerdem die Verwendung der erfindungsgemäß erhaltenen Phenolresolether zur Herstellung von Beschichtungssystemen, in Klebstoffen und als Kautschukhilfsmittel.

Bezüglich der Aufbaukomponenten und einzelnen Verfahrensschritte sowie zur Verwendung der Verfahrensprodukte ist im einzelnen folgendes auszuführen.

A. Für den Fall der Verfahrensdurchführung in wäßrigem Medium:

$a_1$ Zur Herstellung der erfindungsgemäßen Amid- und Imid-modifizierten o,o'-Methylenether verknüpften Phenolresolether werden Phenol, gegebenenfalls im Gemisch mit $C_1$- bis $C_{10}$-Alkylphenolen (o- oder p-substituiert) oder Kohlenwasserstoffharze, die Phenolgruppierungen eingebaut enthalten, oder polybutadienölmodifizierte Phenolkörper, z.B. nach der EP 2 517, sowie gegebenenfalls m-substituierten $C_1$- bis $C_{18}$-Alkylphenolen zusammen mit Formaldehyd im wäßrigen System in Anwesenheit von die Reaktion in die o-Position dirigierenden Katalysatoren, z.B. zweiwertigen Metallionen bei pH 4 bis 7, bevorzugt ph 4,5 bis 6,0, im allgemeinen bei 80 bis 100°C zur Reaktion gebracht, bis der Formaldehyd überwiegend abreagiert hat. Als Katalysatoren kommen die Salze flüchtiger organischer Carbonsäuren 2-wertiger elektropositiver Metalle in Frage, wie z.B. in $Zn^{++}$, $Sn^{++}$, $Mg^{++}$, $Ca^{++}$, $Pb^{++}$, $Ba^{++}$ und $Co^{++}$, gegebenenfalls auch deren Gemische, in einer Menge von 0,5 bis 10, bevorzugt 1,3 bis 5 Gew.%, bezogen auf eingesetztes Phenol, bevorzugt in Form ihrer carbonsauren Salze, wie ihrer Formiate, Acetate und Propionate. Besonders bevorzugt sind Formiate und Acetate.
Die einzusetzenden Mengenverhältnisse Phenol/Formaldehyd liegen im allgemeinen bei 1:1,0 bis 1:2,5 Mol, bevorzugt 1:1,5 bis 1:2,2 Mol.
Der Kondensationsgrad der Produkte gegen Ende dieser Verfahrensstufe beträgt im Mittelwert 1 bis 4 Phenoleinheiten. Bei höheren Kondensationsgraden liegt meistens eine nicht homogene wäßrige Einstellung vor.

$a_2$ Die Verfahrensstufe $a_2$ betrifft die Entfernung der gelöst vorliegenden Katalysatormengen, also der zweiwertigen Metallionen.

$a_{2.1}$ Zu diesem Zweck können sie in wasserunlösliche Salze, z.B. Phosphate (Hydrogen- oder Ammonium-Phosphate) oder Sulfate oder Carbonate überführt werden. Als Auswahlkriterium gilt die problemlose Abtrennung der praktisch unlöslichen Salze, z.B. durch Filtration. Die Filtration begünstigend wirkt zu diesem Zeitpunkt bereits die Anwesenheit von die Homogenisierung des Ansatzes herbeiführenden Zusätzen, die vor der Veretherung wieder entfernt werden, wie z.B. Methanol.
Bevorzugt werden die für die Durchführung des Verfahrens besonders geeigneten Zinksalze als Hydrogenphosphate entfernt.
Zur Herstellung der unlöslichen Phosphate wird zweckmäßigerweise wäßrige Phoshorsäure bei 20 bis 70°C, bevorzugt 40 bis 60°C, innerhalb etwa einer Stunde zudosiert. Überschüsse an nicht umgesetzter Phoshorsäure sind zu vermeiden, da diese zu übermäßigem Molekulargewichtsanstieg oder zur Vernetzung des Ansatzes führen können.

$a_{2.2}$ Eine andere, ebenfalls sehr wirkungsvolle Methode ist die Anwendung von $Me^{++}$-Formiaten, -Acetaten oder anderen Salzen zweiwertiger Metalle, die unter den Bedingungen der Methylolierung bei 80 bis 100°C gelöst vorliegen, nach dem Abkühlen aber kristallisieren und so leicht abzutrennen sind. Für diese Methode geeignet sind z.B. Zinkformiat und Bariumacetat.
Besonders vorteilhaft ist die Verfahrensvariante $a_{2.2}$ durchzuführen, wenn das Reaktionsprodukt ein mittleres Molekulargewicht von 150 bis 250 aufweist.

$a_3$ Dieser Verfahrensschritt dient der Abtrennung des Wassers und zwar des Lösungsmittelwassers und des Reaktionswassers. Unter Reaktionswasser ist abgespaltenes Wasser aus der Veretherung der Methylolgruppen und Reaktionswasser aus der modifizierenden Reaktion mit den Amidgruppen aufweisenden Verbindungen zu verstehen. Der Veretherungsgrad der Methylolgruppen kann stark schwanken, sollte jedoch so eingestellt sein, daß die Reaktivität der Produkte nicht zu hoch ist und, wenn gewünscht, eine möglichst vollständige bzw. problemlose Entfernung der Restphenolmengen im Dünnschichtverdampfer gewährleistet wird. Im übrigen richtet sich der Veretherungsgrad nach dem Verwendungszweck der Produkte. So sind z.B. für die Verwendung als Beschichtungsmittel auf dem Gebiet der kathodischen Elektrotauchlackierung in manchen Fällen methylolgruppenarme Produkte besonders vorteilhaft einzusetzen. Die Herstellung solcher Produkte wird durch das erfindungsgemäße Verfahren ermöglicht.
Die Abtrennung des Wassers erfolgt meistens in Anwesenheit eines Schleppmittels wie Toluol oder Cyclohexan unter vermindertem Druck, bevorzugt beginnend bei 30 bis 50°C, gegebenenfalls unter langsamer Erhöhung der Temperatur auf 80°C. Die Abtrennung des Reaktionswassers erfolgt bei 40 bis 120°C, vorzugsweise 40 bis 90°C und Abnahme des pH-Wertes des übergehenden Wassers.
Als Faustregel kann gelten, je niedriger die Temperaturen zu Beginn der Destillation gewählt werden, je höher können die Temperaturen sein, bei denen die Reaktion zu Ende geführt wird.

Nach der Beendigung der Veretherungsreaktionen weisen die Verfahrensprodukte im allgemeinen einen Kondensationsgrad von 2 bis 6, vorzugsweise 3 bis 5 auf. Der Restphenolgehalt liegt bei 4 bis 12, meistens bei 5 bis 7 Gew.% Phenol, bezogen auf das Festharz.

Als Modifizierungsmittel geeignete Amidgruppen und/oder Imidgruppen aufweisende Verbindungen kommen Mono- und Diamide, Mono- und Dicarbamate, Mono- und asymmetrische Dialkylharnstoffe sowie Harnstoff in Frage, außerdem cyclische Verbindungen, die mindestens eine Amidgruppe aufweisen, wie Ethylenharnstoff, Propylenharnstoff, Pyrrolidon, Oxazolinon, Caprolactam, auch die cyclischen Verbindungen, die sich aus Harnstoffen, Formaldehyd und Isobutyraldehyd herstellen lassen sowie Verbindungen, die Imidgruppen aufweisen, wie Succinimid, Phthalimid usw.

Die Auswahl geeigneter Modifizierungsmittel erfolgt zweckmäßigerweise nach der Durchführbarkeit der Methylolierungsreaktion an der amidischen NH-Funktion. Besonders bevorzugt sind Monocarbamate auf der Basis von Alkoholen mit einer Kettenlänge von 1 bis 18 Kohlenstoffatomen, die auch Ethergruppen aufweisen können (Polyglykole), Monoamide auf der Basis von Carbonsäuren mit einer Kettenlänge von 1 bis 18 Kohlenstoffatomen im Alkylrest, insbesondere dann, wenn dieser verzweigt ist und außerdem auch Ethergruppen aufweisen kann, sowie asymmetrische Dialkylharnstoffe mit einer Kettenlänge von bevorzugt 1 bis 9 Kohlenstoffatomen im Alkylrest.

B. Für den Fall der Verfahrensdurchführung in einem nichtpolaren organischen Lösungsmittel gilt:

$b_1$ Die Methylolierung wird in Anwesenheit von 0,1 bis 0,3 Gew.% zweiwertiger Metallionen, bezogen auf das eingesetzte Phenol, durchgeführt, ausgewählt aus den unter $a_1$ genannten zweiwertigen Metallen, beispielsweise in Form ihrer Capronsäuresalze, vorzugsweise in Form ihrer Naphthenate, Oktoate und Neodecanoate.

$b_2$ Die Modifizierung wird in Anwesenheit mindestens einer der unter $a_3$ genannten Amidgruppen und/oder Imidgruppen aufweisenden Verbindungen, vorteilhafterweise unter Rückführung des Destillates bei 60 bis 120, vorzugsweise 60 bis 90°C vorgenommen.

Eine Entfernung des Katalysators ist in dieser Verfahrensvariante (Fahrweise wasserarm bzw. wasserfrei) nicht vorgesehen.

Zur Reduzierung bzw. Entfernung der Restphenolmengen können die nach der Modifizierung (Verfahrensstufe $a_3$ bzw. $b_2$) vorliegenden Produkte im Dünnschichtverdampfer, im allgemeinen bei 80 bis 130°C, vorzugsweise unter vermindertem Druck auf einen Gehalt von <1 Gew.% Phenol eingestellt werden.

Der vorteilhafterweise auszuwählende Druckbereich liegt bei 1 bis 25 mbar.

Für einige Anwendungen, besonders auf dem Beschichtungssektor, ist es vorteilhaft, Produkte besonders niedriger Restphenolgehalte bereitzustellen; in diesen Fällen lassen sich Produkte mit Phenolgehalten von 0,01 bis 0,5 %, bezogen auf das Festharz herstellen.

Dazu werden vorzugsweise die auf einen Feststoffgehalt von 50 bis 85 %, vorzugsweise 60 bis 80 % aufkonzentrierten Harzlösungen eingesetzt.

Unter der Voraussetzung, daß diese Harzlösung ausreichende Mengen Formaldehyd enthält, können das oder die modifizierenden amidgruppenaufweisenden Verbindungen auch an diesem Verfahrenspunkt, d.h. vor der Behandlung im Dünnschichtverdampfer, zugesetzt werden. Bei geeigneter Temperaturführung werden Produkte mit ähnlichen Eigenschaften erhalten wie nach dem Verfahrensschritt $a_3$ oder $b_2$.

Der Kondensationsgrad der erfindungsgemäßen Produkte steigt nach der Behandlung im Dünnschichtverdampfer nochmals an. Temperatur und Verweilzeit können so gewählt werden, daß die Verfahrensprodukte das gewünschte mittlere Molekulargewicht aufweisen. Molekulargewichte von im Mittel 300 bis 2000, bevorzugt 400 bis 800, ermöglichen im allgemeinen die besonders vorteilhafte Verwendung der erfindungsgemäßen Produkte für die vorgesehenen Einsatzgebiete.

Als Dünnschichtverdampfer kommen in Frage Fallfilmverdampfer (Röhrenverdampfer) und Verdampfer, bei denen Schichten durch mechanische Vorrichtungen wie z.B. Rührer mit Wischern erzeugt werden (sog. Sambay®- oder Luwa®-Verdampfer). Die Verdampfereinheiten können auch in Reihe hintereinander angeordnet sein, dabei kann z.B. in einen vorgeschalteter Fallfilmverdampfer die Aufkonzentrierung des Resolethers durchgeführt werden.

Die Verfahrenssicherheit beim Aufarbeiten der Produkte im Dünnschichtverdampfer kann durch die in der deutschen Patentanmeldung P 32 25 072.0 vorgeschlagenen Verfahrensvarianten gesteigert werden.

In Abhängigkeit von der eingesetzten zweiwertigen Metallverbindung werden, z.B. bei Verwendung von $Zn^{++}$, hellfarbige bzw. bei Verwendung von $Pb^{++}$, dunkle viskose Massen mit Feststoffgehalten von 85 bis 97,5 % erhalten.

Nach der Variante A hergestellte Verfahrensprodukte, bei denen das Reaktionswasser bei niedrigen Temperaturen (45 bis 80°C) entfernt wird, weisen im allgemeinen ein niedriges Veretherungsverhältnis von Benzylether-Gruppen zu Methylolether-Gruppen sowie einen höheren Gehalt an nicht veretherten Methylolgruppen auf. Verfahrensprodukte, bei denen das Reaktionswasser bei höheren Temperaturen (80 bis 110°C) entfernt wird, besitzen einen höheren Veretherungsgrad bei niedrigem Gehalt an Methylolgruppen und in einigen Fällen einen höheren Gehalt an Methylgruppen.

Die Mengen an einzusetzendem Modifizierungsmittel richten sich im allgemeinen nach dem Gehalt an Methylolphenolgruppen. Das Molverhältnis der Amidgruppen und/oder Imidgruppen aufweisenden Verbindungen zu Phenolmethylol-Gruppen, das die

Kondensationsprodukte vor Zugabe der Modifizierungsmittel aufweisen, ist im allgemeinen von 1:1 bis 0,1:1, vorzugsweise 0,8:1 bis 0,2:1 zu wählen.

Modifizierungsmittel, die mehr als eine Amid- oder Imidgruppe im Molekül enthalten, sollten das Äquivalenzverhältnis zu den Methylolphenolgruppen nicht überschreiten. Amidgruppen bzw. Imidgruppen, die nicht zur Umsetzung mit dem Phenolresol vorgesehen sind, können nach Methylolierung mit Alkoholen verethert werden.

Die Verwendung der erfindungsgemäßen Verfahrensprodukte erfolgt entweder in der angegebenen hochkonzentrierten Form oder verdünnt mit einem geeigneten Lösungsmittel wie z.B. Alkoholen oder Estern.

Der Einsatz der erfindungsgemäß hergestellten Phenolresolether kann beispielsweise als Alleinbindemittel erfolgen. Eine bevorzugte Einsatzmöglichkeit besteht in der Kombination mit anderen, zur Co-Vernetzung geeigneten Stoffen. Von diesen seien besonders genannt: Bindemittel mit basischen N-Atomen im Molekül, besonders solche, die NH-Gruppen aufweisen, wobei Einbrenntemperaturen von 130°C erreicht werden. Insbesondere seien solche genannt, die sich zur Verwendung als kathodische Elektrotauchlackbindemittel eignen, wie sie z.B. in der DE-Patentanmeldung P 34 22 474.2 sowie solche, die in der DE-OS 27 37 375 beschrieben sind. Gegebenenfalls ist die Anwesenheit eines sauren Katalysators, wie sie für diesen Einsatzzweck genannt wird, für die Beschleunigung der Vernetzungsreaktion nützlich.

Außerdem eignen sich die Amidgruppen bzw. Imidgruppen modifizierten erfindungsgemäßen o,o'-Methylenether-verknüpften Phenolresolether zur Verwendung als Kautschukhilfsmittel.

Im übrigen eignen sich die erfindungsgemäßen Produkte zur Herstellung von Preßmassen, Laminaten und Klebstoffen sowie als Binde- bzw. Vernetzungsmittel zur Herstellung von Elektroisolationsmitteln. Des weiteren lassen sich aus den erfindungsgemäßen orthoreichen Resolethern wäßrige Sekundärdispersionen herstellen, die ebenfalls auf einigen der genannten Einsatzgebiete vorteilhaft verwendet werden können.

Die in den Beispielen genannten Teile und Prozente sind, soweit nicht anders angegeben, Gewichtsteile und Gewichtsprozente.

Beispiel 1

1075,0 Teile Phenol, 1886,0 Teile wäßrige Formaldehyd-Lösung (40 %ig) und 148,5 Teile Zinkacetat ($Zn(CH_3COO)_2 \times 2H_2O$) wurden langsam auf 90°C aufgeheizt und 3,5 Stunden bei dieser Temperatur gehalten.

Anschließend wurde gekühlt, mit 200 Teilen Methanol versetzt und bei 30°C innerhalb einer Stunde 146,5 Teile 40 %ige o-Phosphorsäure zugetropft und vom gebildeten kristallinen Niederschlag abfiltriert.

Die klare Harzlösung wurde nach Zugabe von 300 Teilen Toluol als Schleppmittel bei 35°C unter vermindertem Druck in einer Apparatur, die mit wirksamen Kühlern versehen ist, durch Auskreisen von 1000 Teilen Destillat (überwiegend Wasser) aufkonzentriert, schließlich wurden 300 Teile Isobutylcarbamat zugesetzt und bis zum Erreichen einer Innentemperatur von 50°C weitere 560 Teile Destillat ausgekreist.

Die resultierende Harzlösung wurde über ein Druckfilter filtriert und mit 8 Teilen Di-n-butylamin versetzt. Das Kondensationsprodukt wies ein mittleres Molekulargewicht von 265 auf.

Bei 80°C und 110°C und einem Druck von 1,0 mbar wurde das Produkt in einem zweistufig arbeitenden Dünnschichtverdampfer aufgearbeitet. Man erhielt 1365 Teile eines hellfarbigen Harzes mit einem mittleren Molekulargewicht von 285 und einer Viskosität von 120 mPas/100°C (gemessen mit dem ICI-Platte/Kegel-Viskosimeter). Der Restphenolgehalt betrug 0,1 %; der Zinkgehalt lag bei 541 ppm.

Beispiel 2

Ansatz und Durchführung erfolgte wie in Beispiel 1 beschrieben. Nach der Entfernung des Zinkphosphates wurde das Wasser im ersten Schritt bei 35°C ausgekreist, wobei ca. 1260 Teile Destillat erhalten wurden. Danach wurden 740 Teile Isodecylcarbamat (Beispiel 2a) zugesetzt und weiter bei 40°C ausgekreist, bis weitere 340 Teile Destillat entfernt worden sind.

Die resultierende Harzlösung wird über einen Druckfilter filtriert und mit 4 Teilen Di-n-butylamin versetzt.

Das Kondensationsprodukt wies ein mittleres Molekulargewicht von 272 auf.

Bei 70°C und 120°C und einem Druck von 1,0 mbar wurde das Produkt in einem zweistufig arbeitenden Dünnschichtverdampfer aufgearbeitet. Man erhielt 1910 Teile eines hellfarbigen Harzes mit einem Festgehalt von 92 %, einem mittleren Molekulargewicht von 487 und einer Viskosität von 480 mPas/100°C. Der Restphenolgehalt betrug 0,12 %; der Zinkgehalt lag bei 44 ppm.

Beispiel 2a

567 Teile Isodecanol, 324 Teile Harnstoff und 18,9 Teile eines mit $Ni^{++}$-dotierten Ionenaustauschers (Amberlit 200® Ni-Gehalt 8 bis 9 %) wurden unter Stickstoffspülung bei 160°C 20 Stunden gerührt und anschließend heiß über eine Glasfilternutsche abgesaugt. Es wurden 646 Teile einer schwach gefärbten Flüssigkeit erhalten, die noch 9 % Isodecanol enthielt. Der Gehalt an nicht umgesetztem Harnstoff lag bei 1,1 %. Das Reaktionsprodukt bestand neben Isodecylcarbamat (Hauptmenge) aus Isodecylallophanat und Imidocarbonsäureisodecylester [$HN(COO\text{-}C_{10}H_{21})_2$].

Beispiel 3

800,0 Teile Epoxid/Hexamethylendiamin-Addukt (hergestellt nach Beispiel B der Deutschen Patentanmeldung P 34 22 473.4), 280 Teile Dimerfettsäure (z.B. Pripol® 1014 der Fa. Unilever AG), 35,0 Teile Stearinsäure, 18,0 Teile Triphenylphosphin, 24

Teile Ethylendiamin gelöst in 188,0 Teilen Phenylglykol, 54 Teile Benzylalkohol und 85,0 Teile Toluol wurden bei 170°C unter Auskreisen von Wasser umgesetzt, bis eine Säurezahl von 3 bis 4 mg KOH/g erreicht, ist und mit 9,6 Teilen 1-Methoxypropanol-2, 75 Teilen Butylglykol, 110 Teilen Ethanol sowie 135 Teilen Wasser und 11,3 Teilen Essigsäure verdünnt und filtriert. Der Feststoffgehalt des Bindemittels betrug 64 %, die Aminzahl lag bei 69,5 mg KOH/g.

Zur Herstellung von 3000 Teilen eines 10 %igen Elektrotauchbades wurden 328,0 Teile dieses Bindemittels mit 115,0 Teilen des nach Beispiel 2 hergestellten Phenolharzes, das durch Nachkondensation bei 95 bis 100°C auf eine Viskosität von 600 mPas/100°C entsprechend einem mittleren Molekulargewicht von 585 und anschließend auf einen Festgehalt von 80 % in Ethanol eingestellt wurde, gut gemischt, mit 5,0 Teilen Essigsäure protoniert, mit vollentsalztem Wasser langsam verdünnt und schließlich 2 Tage bei 25°C ausgerührt. Der pH-Wert lag bei 7,15, der Leitwert des Bades bei 1200 [µS]. Die Abscheidungen bei 375 V/2 Minuten auf mit Zinkphosphat beschichteten als Kathode geschalteten Stahlblechen (Bonder® 132 der Fa. Metallgesellschaft AG) wurden jeweils 20 Minuten bei 130°C und 140°C gehärtet und ergaben praktisch acetonfeste Beschichtungen hoher Elastizität mit einer Schichtdicke von 20 µm, die nach 20 Tagen Beanspruchung im Salzsprühtest nach DIN 5002 Korrosionswerte von 0,5 bis 1 mm aufweisen. Zur Prüfung des Alterungsverhaltens des Lack-Bades wurden nach 10 Tagen (pH-Wert 7,1 L = 1200 [µS]) nochmals unter den oben genannten Bedingungen Beschichtungen angefertigt; Aussehen und Schichtdicke (19 µm) blieben praktisch unverändert. Der pH-Wert nach 500 Stunden Badalterung beträgt 7,05, der Leitwert lag bei 1220 [µS].

**Patentansprüche**

1. Modifizierte Phenolharze auf Basis von über o,o'-Methylenethergruppen verknüpften Phenolresolethern, die aus Phenol und/oder m-alkylsubstituierten Phenolen, gegebenenfalls im Gemisch mit anderen Alkylphenolen, und Formaldehyd oder Formaldehyd-liefernden Verbindungen in Gegenwart von Metall(II)salzen erhältlich sind, dadurch gekennzeichnet, daß sie Amidgruppen und/oder Imidgruppen aufweisende Verbindungen eingebaut enthalten.

2. Modifizierte Phenolharze nach Anspruch 1, dadurch gekennzeichnet, daß die Amidgruppen- und/oder Imidgruppen aufweisenden Verbindungen über intermediär gebildete N-Methylolgruppen eingebaut sind.

3. Modifizierte Phenolharze nach Anspruch 1 oder 2, dadurch gekennzeichnet, daß sie als Amidgruppen- und/oder Imidgruppen aufweisende Verbindung ein Monoalkyl- oder Monoalkoxy-Carbamat eingebaut enthalten.

4. Modifizierte Phenolharze nach einem der vorhergehenden Ansprüche, dadurch gekennzeichnet, daß sie als Amidgruppen- und/oder Imidgruppen aufweisende Verbindungen einen asymmetrischen Dialkylharnstoff eingebaut enthalten.

5. Verfahren zur Herstellung von modifizierten Phenolharzen nach einem der Ansprüche 1 bis 4, aus Phenol- oder m-alkylsubstituierten Phenolen, gegebenenfalls im Gemisch mit anderen Alkylphenolen, und Formaldehyd oder Formaldehyd-liefernden Verbindungen in Gegenwart von Metall(II)salzen und Modifizierung mit Amidgruppen und/oder Imidgruppen aufweisenden Verbindungen, dadurch gekennzeichnet, daß

A. für den Fall der Verfahrensdurchführung beginnend mit der Methylolierung in wäßrigem Medium

$a_1$ die Methylolierung in Anwesenheit von 0,5 bis 10 Gew.% zweiwertiger Metallionen, bezogen auf das eingesetzte Phenol, durchgeführt wird,

$a_2$ die zweiwertigen Metallionen anschließend als schwerlösliches Salz entfernt werden,

$a_3$ die Abtrennung des als Lösungsmittel im Reaktionsgemisch vorliegenden Wassers in Anwesenheit der Amidgruppen und/oder Imidgruppen aufweisenden Verbindung, gegebenenfalls in Anwesenheit eines Schleppmittels bei 30 bis 80°C, die Abtrennung des beim Einbau der Amidgruppen und/oder Imidgruppen aufweisenden Verbindungen entstehenden Reaktionswassers bei 40 bis 120°C, durchgeführt wird;

B. für den Fall der Verfahrensdurchführung, beginnend mit der Methylolierung in einem nicht polaren organischen Lösungsmittel

$b_1$ die Methylolierung in Anwesenheit von 0,1 bis 0,3 Gew.% zweiwertiger Metallionen, bezogen auf das eingesetzte Phenol, durchgeführt wird,

$b_2$ die Modifizierung mit Amidgruppen und/oder Imidgruppen aufweisenden Verbindungen, gegebenenfalls unter Rückführung des übergehenden Destillates, bei 60 bis 120°C durchgeführt wird,

und schließlich die Restphenolmengen der nach A. oder B. hergestellten Verfahrensprodukte durch Dünnschichtverdampfung auf einen Gehalt an Phenol von unter 1 Gew.% entfernt werden.

6. Verfahren nach Anspruch 5, dadurch gekennzeichnet, daß im Falle der Verfahrensdurchführung nach B. die Naphthenate, Oktoate oder Neodecanate zweiwertiger Metalle eingesetzt werden.

7. Verfahren nach Anspruch 5, dadurch gekennzeichnet, daß im Falle der Verfahrensdurchführung nach A, die zweiwertigen Metallionen als Salze der Phosphorsäure abgetrennt werden.

8. Verwendung der modifizierten Phenolharze nach einem der Ansprüche 1 bis 4 in Beschichtungssystemen.

9. Verwendung der modifizierten Phenolharze nach einem der Ansprüche 1 bis 4 in kathodisch abscheidbaren Elektrotauchlacken.

10. Verwendung der modifizierten Phenolharze nach einem der Ansprüche 1 bis 4 in Klebstoffen.

11. Verwendung der modifizierten Phenolharze nach einem der Ansprüche 1 bis 4 als Kautschukhilfsmittel.

**Patentansprüche für den Vertragsstaat: AT**

1. Verfahren zur Herstellung von modifizierten Phenolharzen aus Phenol- oder m-alkylsubstituierten Phenolen, gegebenenfalls im Gemisch mit anderen Alkylphenolen, und Formaldehyd oder Formaldehyd-liefernden Verbindungen in Gegenwart von Metall(II)salzen und Modifizierung mit Amidgruppen und/oder Imidgruppen aufweisenden Verbindungen, dadurch gekennzeichnet, daß

A. für den Fall der Verfahrensdurchführung beginnend mit der Methylolierung in wäßrigem Medium

$a_1$ die Methylolierung in Anwesenheit von 0,5 bis 10 Gew.% zweiwertiger Metallionen, bezogen auf das eingesetzte Phenol, durchgeführt wird,

$a_2$ die zweiwertigen Metallionen anschließend als schwerlösliches Salz entfernt werden,

$a_3$ die Abtrennung des als Lösungsmittel im Reaktionsgemisch vorliegenden Wassers in Anwesenheit der Amidgruppen und/oder Imidgruppen aufweisenden Verbindung, gegebenenfalls in Anwesenheit eines Schleppmittels bei 30 bis 80°C, die Abtrennung des beim Einbau der Amidgruppen und/oder Imidgruppen aufweisenden Verbindungen entstehenden Reaktionswassers bei 40 bis 120°C, durchgeführt wird;

B. für den Fall der Verfahrensdurchführung, beginnend mit der Methylolierung in einem nicht polaren organischen Lösungsmittel

$b_1$ die Methylolierung in Anwesenheit von 0,1 bis 0,3 Gew.% zweiwertiger Metallionen, bezogen auf das eingesetzte Phenol, durchgeführt wird,

$b_2$ die Modifizierung mit Amidgruppen und/oder Imidgruppen aufweisenden Verbindungen, gegebenenfalls unter Rückführung des übergehenden Destillates, bei 60 bis 120°C durchgeführt wird,

und schließlich die Restphenolmengen der nach A. oder B. hergestellten Verfahrensprodukte durch Dünnschichtverdampfung auf einen Gehalt an Phenol von unter 1 Gew.% entfernt werden.

2. Verfahren nach Anspruch 1, dadurch gekennzeichnet, daß im Falle der Verfahrensdurchführung nach B. die Naphthenate, Oktoate oder Neodecanate zweiwertiger Metalle eingesetzt werden.

3. Verfahren nach Anspruch 1, dadurch gekennzeichnet, daß im Falle der Verfahrensdurchführung nach A, die zweiwertigen Metallionen als Salze der Phosphorsäure abgetrennt werden.

4. Verwendung der nach einem Verfahren gemäß einem der Ansprüche 1 bis 3 hergestellten modifizierten Phenolharze in Beschichtungssystemen.

5. Verwendung der nach einem Verfahren gemäß einem der Ansprüche 1 bis 3 hergestellten modifizierten Phenolharze in kathodisch abscheidbaren Elektrotauchlacken.

6. Verwendung der nach einem Verfahren gemäß einem der Ansprüche 1 bis 3 hergestellten modifizierten Phenolharze in Klebstoffen.

7. Verwendung der nach einem Verfahren gemäß einem der Ansprüche 1 bis 3 hergestellten modifizierten Phenolharze als Kautschukhilfsmittel.

**Claims**

1. A modified phenol resin which is based on a phenol resol ether attached via an 0,0′-methylene ether group and which is obtainable from phenol or an m-alkyl-substituted phenol, if desired mixed with other alkylphenols, and formaldehyde or a formaldehyde donor, in the presence of a metal (II) salt, wherein the said phenol resin incorporates a compound possessing amide or imide groups.

2. A modified phenol resin as claimed in claim 1, wherein the compound possessing amide or imide groups is incorporated via N-methylol groups formed at an intermediate stage.

3. A modified phenol resin as claimed in claim 1 or 2, which contains a monoalkyl or monoalkoxy carbamate incorporated as the compound possessing amide or imide groups.

4. A modified phenol resin as claimed in any of the preceding claims, which contains an asymmetric dialkylurea incorporated as the compound possessing amide or imide groups.

5. A process for the preparation of a modified phenol resin as claimed in any of claims 1 to 4, from phenol or an m-alkyl-substituted phenol, if desired as a mixture with other alkylphenols, and formaldehyde or a formaldehyde donor, in the presence of a metal(II) salt, and modification with a compound possessing amide or imide groups, wherein

A. if the procedure begins with methylolation in an aqueous medium,

$a_1$ the methylolation is carried out in the presence of from 0.5 to 10% by weight, based on the phenol used, of a divalent metal ion,

$a_2$ the divalent metal ion is then removed as a sparingly soluble salt, and

$a_3$ the water present as a solvent in the reaction mixture is separated of in the presence of the compound possessing amide or imide groups and in the presence or absence of an entraining agent at from 30 to 80°C, while the water of reaction formed during the incorporation of the compound possessing amide or imide groups is separated off at from 40 to 120°C,

or

B. if the procedure begins with methylolation in a non-polar organic solvent,

$b_1$ the methylolation is carried out in the presence of from 0.1 to 0.3% by weight, based on the phenol used, of a divalent metal ion, and

$b_2$ the modification is effected at from 60 to 120°C with a compound possessing amide or imide groups, with or without recycling of the distillate,

and, finally, the residual amount of phenol from the preparation of the product according to A. or B. is removed by evaporation in a thin film evaporator, the phenol content being reduced to less than 1% by weight.

6. A process as claimed in claim 5, wherein, in the case of procedure B, the naphthenate, octoate or neodecanoate of a divalent metal is used.

7. A process as claimed in claim 5, wherein, in the case of procedure A, the divalent metal ion is separated off as a salt of phosphoric acid.

8. Use of a modified phenol resin as claimed in any of claims 1 to 4 in coating systems.

9. Use of a modified phenol resin as claimed in any of claims 1 to 4 in cathodic electrocoatings.

10. Use of a modified phenol resin as claimed in any of claims 1 to 4 in adhesives.

11. Use of a modified phenol resin as claimed in any of claims 1 to 4 as rubber aids.

**Claims for the contracting state: AT**

1. A process for the preparation of a modified phenol resin from phenol or an m-alkyl-substituted phenol, if desired as a mixture with other alkylphenols, and formaldehyde or a formaldehyde donor, in the presence of a metal(II) salt, and modification with a compound possessing amide or imide groups, wherein

A. if the procedure begins with methylolation in an aqueous medium,

$a_1$ the methylolation is carried out in the presence of from 0.5 to 10% by weight, based on the phenol used, of a divalent metal ion,

$a_2$ the divalent metal ion is then removed as a sparingly soluble salt, and

$a_3$ the water present as a solvent in the reaction mixture is separated off in the presence of the compound possessing amide or imide groups and in the presence or absence of an entraining agent at from 30 to 80°C, while the water of reaction formed during the incorporation of the compound possessing amide or imide groups is separated off at from 40 to 120°C,

B. if the procedure begins with methylolation in a non-polar organic solvent,

$b_1$ the methylolation is carried out in the presence of from 0.1 to 0.3% by weight, based on the phenol used, of a divalent metal ion, and

$b_2$ the modification is effected at from 60 to 120°C with a compound possessing amide or imide groups, with or without recycling of the distillate,

and, finally, the residual amount of phenol from the preparation of the product according to A. or B. is removed by evaporation in a thin film evaporator, the phenol content being reduced to less than 1% by weight.

2. A process as claimed in claim 1, wherein, in the case of procedure B, the naphthenate, octoate or neodecanoate of a divalent metal is used.

3. A process as claimed in claim 1, wherein, in the case of procedure A, the divalent metal ion is separated off as a salt of phosphoric acid.

4. Use of a modified phenol resin prepared by a process as claimed in any of claims 1 to 3 in coating systems.

5. Use of a modified phenol resin prepared by a process as claimed in any of claims 1 to 3 in cathodic electrocoatings.

6. Use of a modified phenol resin prepared by a process as claimed in any of claims 1 to 3 in adhesives.

7. Use of a modified phenol resin prepared by a process as claimed in any of claims 1 to 3 as rubber aids.

**Revendications**

1. Résines phénoliques modifiées à base d'éthers phénolrésol, reliés par des groupes éther 0,0'-méthylénique, qui sont obtenus, en présence de sels de métaux (II), à partir de phénol et/ou phénols m-alkylsubstitués, éventuellement en mélange avec d'autres alkylphénols et du formaldéhyde ou des composés générant du formaldéhyde, caractérisées par le fait qu'elles contiennent, incorporés, des composés possédant des groupes amide et/ou des groupes imide.

2. Résines phénoliques modifiées selon la revendication 1, caractérisées par le fait que les composés possédant des groupes amide et/ou des groupes imide sont incorporés par l'intermédiaire de groupes N-méthylol formés entre-temps.

3. Résines phénoliques modifiées selon la revendication 1 ou 2, caractérisées par le fait qu'elles contiennent, incorporés, comme composés possédant des groupes amide et/ou imide, un carbonate de monoalkyle ou de monoalcoxy.

4. Résines phénoliques modifiées selon l'une des revendications précédentes, caractérisées par le fait qu'elles contiennent, incorporés, comme composés possédant des groupes amide et/ou imide, une dialkylurée asymétrique.

5. Procédé de préparation de résines phénoliques modifiées selon l'une des revendications 1 à 4 en présence de sels de métaux (II), à partir de phénol et/ou phénols m-alkylsubstitués, éventuellement en mélange avec d'autres alkylphénols et du formaldéhyde ou des composés générant du formaldéhyde et modification avec des composés possédant des groupes amide et/ou des groupes imide, caractérisé par le fait que:

A. dans le cas de mise en œuvre du procédé commençant par la méthylolation en milieu aqueux

$a_1$. la méthylation est effectuée en présence de 0,5 à 10% en poids d'ions métalliques bivalents, rapportés au phénol introduit

$a_2$. les ions métalliques bivalents sont éliminés ensuite sous forme de sels difficilement solubles

$a_3$. la séparation de l'eau présente dans le mélange de réaction comme solvant est effectuée entre 30 et 80 °C, en présence du composé possédant des groupes amide et/ou imide, éventuellement en présence d'un entraîneur, la séparation de l'eau de réaction, se produisant lors de l'incorporation des composés possédant des groupes amide et/ou des groupes imide, est effectuée entre 40 et 120 °C

B. dans le cas de mise en œuvre du procédé commençant par la méthylolation dans un solvant organique non polaire,

$b_1$. la méthylolation est effectuée en présence de 0,1 à 0,3% en poids d'ions métalliques bivalents, rapportés au phénol introduit

$b_2$. la modification avec des composés possédant des groupes amide et/ou des groupes imide est effectuée entre 60 et 120 °C, eventuellement avec recyclage du distillat qui passe

et enfin la quantité de phénol restante des produits du procédé obtenus selon A. ou B. est éliminée jusqu'à une teneur en phénol de moins de 1% en poids par vaporisation en couche mince.

6. Procédé selon la revendication 5, caractérisé par le fait que, dans le cas de mise en œuvre du procédé selon B., on introduit des naphtenates, octoates ou néodécanates de métaux bivalents.

7. Procédé selon la revendication 5, caractérisé par le fait que dans le cas de mise en œuvre du procédé selon A., les ions métalliques bivalents sont séparés sous forme de sels d'acide phosphorique.

8. Utilisation des résines phénoliques selon l'une des revendications 1 à 4 dans des systèmes d'enduction.

9. Utilisation des résines phénoliqes selon l'une des revendications 1 à 4 dans les peintures et vernis d'électrodéposition séparables cathodiquement.

10. Utilisation des résines phénoliques selon l'une des revendications 1 à 4 dans des adhésifs et colles.

11. Utilisation des résines phénoliques selon l'une des revendications 1 à 4 comme auxiliaires de caoutchouc.

**Revendications pour l'état contractant: AT**

1. Procédé de préparation de résines phénoliques modifiées en présence de sels de métaux (II), à partir de phénol et/ou phénols m-alkylsubstitués, éventuellement en mélange avec d'autres alkylphénols et du formaldéhyde ou des composés générant du formaldéhyde et modification avec des composés possédant des groupes amide et/ou des groupes imide, caractérisé par le fait que:

A. dans le cas de mise en œuvre du procédé commençant par la méthylolation en milieu aqueux

$a_1$. la méthylolation est effectuée en présence de 0,5 à 10% en poids d'ions métalliques bivalents, rapportés au phénol introduit

$a_2$. les ions métalliques bivalents sont éliminés ensuite sous forme de sels diffioilement solubles

$a_3$. la séparation de l'eau présence dans le mélange de réaction comme solvant est effectuée entre 30 et 80 °C, en présence du composé possédant des groupes amide et/ou imide, éventuellement en présence d'un entraîneur, la séparation de l'eau de réaction, se produisant lors de l'incorporation des composés possédant des groupes amide et/ou des groupes imide est effectué entre 40 et 120 °C

B. dans le cas de mise en œuvre du procédé commençant par la méthylolation dans un solvant organique non polaire,

$b_1$. la méthylolation est effectuée en présence de 0,1 à 0,3% en poids d'ions métalliques bivalents, rapportés au phénol introduit

$b_2$. la modification avec des composés possédant des groupes amide et/ou des groupes imide est effectuée entre 60 et 120 °C, eventuellement avec recyclage du distillat qui passe

et enfin la quantité de phénol restante des produits du procédé obtenus selon A. ou B. est éliminée jusqu'à une teneur en phénol de moins de 1% en poids par vaporisation en couche mince.

2. Procédé selon la revendication 1 caractérisé par le fait que, dans le cas de mise en œuvre du procédé selon B., on introduit des naphtenates, octoates ou néodécanates de métaux bivalents.

3. Procédé selon la revendication 1 caractérisé par le fait que dans le cas de mise en œuvre du procédé selon A., les ions métalliques bivalents sont séparés sous forme de sels d'acide phosphorique.

4. Utilisation des résines phénoliques selon l'une des revendications 1 à 3 dans des systèmes d'enduction.

5. Utilisation des résines phénoliques selon l'une des revendications 1 à 3 dans les peintures et vernis en électrodéposition, séparables cathodiquement.

6. Utilisation des résines phénoliques selon l'une des revendications 1 à 3 dans des adhésifs et colles.

7. Utilisation des résines phénoliques selon l'une des revendications 1 à 3 comme auxiliaires de caoutchouc.